# EUROPEAN PATENT SPECIFICATION

(11) **EP 2 264 640 B1**
(45) Date of publication and mention of the grant of the patent: **25.07.2018**
(21) Application number: 10165197.4
(22) Date of filing: 08.06.2010
(51) Int. Cl.: G06F 21/12, G06F 21/62

(54) **Feature specific keys for executable code**
Funktionsspezifische Schlüssel für ausführbaren Code
Clés spécifiques de fonctions pour code exécutable

(30) Priority: 19.06.2009 US 218602 P
(43) Date of publication of application: 22.12.2010
(73) Proprietor: Uniloc Luxembourg, S.A., 2540 Luxembourg (LU)
(72) Inventor: Etchegoyen, Craig Stephen, Irvine, CA 92612 (US); Mordetsky, Joseph Martin, Irvine, CA 92606 (US)
(74) Representative: Browne, Robin Forsythe

(56) References cited:
- EP-A1- 2 037 389
- US-B1- 7 051 211

## Description

### BACKGROUND

### Field

The present disclosure relates to methods and systems for protecting and enabling specific features of distributed computer software.

### Description of Related Art

Software may be distributed with various different and independently operable features programmed in the executable code. The executable code may be possessed by individual users, such as by being copied to the users' respective client devices, before user rights to access all of the programmed features have accrued. For example, software may be distributed as shareware with some features enabled at the time of installation while more comprehensive features cannot be accessed until a license fee is paid. Availability of the free features in the shareware enhances the user base for the software without harming the capacity to collect license fees from more serious users. For further example, computer games or other interactive scored processes may require a user to demonstrate a certain level of skill or achievement, such as completing a game objective or achieving a certain score, before unlocking additional game features. In general, controlling access to separate software features may be used to ensure graduated levels of difficulty in the game and provide psychological rewards for successful game play, generally enhancing the desirability or usefulness of the game or other software.

In addition, built-in controls may be placed on use of distributed software to prevent non-compliance with software license restrictions and preserve a healthy and viable market for desired software. Such controls may involve adding built-in software protection functions to distributed software that is to be protected, for the purpose of controlling or limiting use of the distributed software. For example, a common form of control limits the number of times a distributed software object can be installed on a computer system. Other examples of control functions include requiring each installed instance of the software to be registered with a central registry, or requiring entry of a key imprinted on sales packaging or transmitted to the licensee at the time of purchase to enable installation on a client system. Code for controlling access to individual program features, as described in the paragraph above, may be another form of software control functions. These and other software protection functions may be coded, compiled, and released as part of the licensed software program.

Such software protection features are useful, but subject to being modified or disabled. For example, a motivated hacker might tamper with the binary code that constitutes the software release by trial and error, until creating a tampered version that performs like the original release, but with the software protection features of the original release partially or entirely disabled. The hacker can then distribute the tampered version free of the intended software protection features. Access control for individual features may also be disabled; either permitting unauthorized access to the controlled features, or disabling the controlled features for even authorized users.

US 7051211 describes methods, systems and computer program products that provide for controlling access to software. The software to be controlled is divided into a first encrypted portion and a second unencrypted portion. The second unencrypted portion has access to, and may even incorporate, a first secret value and a software identification associated with a copy of the software. The first encrypted portion is encrypted with a first key value which is based on the first secret value and a second secret value. The second secret value is obtained and the first key value generated from the obtained second secret value and the first secret value. The first encrypted portion of the software may then be decrypted with the first key value. The software may be installed on a data processing system utilizing the decrypted first encrypted portion of the software.

EP 2037389 describes an electronic file protection system that includes at least one first memory device removably disposable in communicative relation with one or more computers, wherein the first memory device includes a unique identifier. The system further includes unique, non-reproducible encryption key data disposed or otherwise saved on the first memory device. The encryption key data is structured to be utilized in conjunction with at least one encryption algorithm so as to at least partially protect the electronic file, or otherwise orient the electronic file in an encrypted mode. Further, the unique identifier is reproducible and disposable in associated relation with a replacement memory device.

It would be desirable, therefore, to provide systems and methods for securing the integrity of executable software to prevent use of tampered software and discourage intentional tampering of software security features. Such systems and methods should also permit separated control of different software features at the client nodes.

### SUMMARY

In a first aspect of the invention there is provided a method for protecting software from tampering, the method in accordance with claim 1. In a second aspect of the invention there is provided a method for executing software at a client device, the method in accordance with claim 10.

The present technology uses a cryptographic hash, digital fingerprint, or simple hash operating on a portion of a compiled software executable to generate a cryptographic key. The compiled software executable comprises a discrete software object made up of one or more binary files, and includes code for performing executable software protection features. The portion of the compiled software executable may be selected to include at least a substantial portion of the executable software protection features coded in binary form, and should exclude any variable portions of the software, for example, data tables holding variable values. The following processes may be performed by one or more computers prior to distribution of the software to client nodes.

The cryptographic key may be generated before distribution of the software object using a defined one-way hashing algorithm implemented on a computer. This cryptographic key is referred to herein as a "first key part" to distinguish it from a second key part described below. Code for applying the one-way hashing algorithm to input data to produce the first cryptographic
key part, and code for decrypting a data object using a supplied key of the form generated by the hashing algorithm, may be compiled and included as part of the executable software protection for the software object to be distributed. In the alternative, such code may be maintained separately from the distributed software object. The hashing and decryption/encryption algorithms themselves may be selected from any suitable hashing or decryption/encryption algorithm as known in the art of cryptography.

Before distribution of the software object, instructions for performing separate functions or features of the software are identified and selected for control. Functions for control, for example, may include functions that are essential to the software's principal purpose, such as in the case of shareware, or a series of separate functions corresponding to different access or license levels. Several such functions may be identified for control. Once the functions to be controlled are selected, the software object to be distributed is compiled, and a portion or portions of the compiled software necessary for execution of the selected functions are identified. These identified portions of the executable may exclude every portion of the compiled software executable used to generate the cryptographic key.

Each of the separate functions may be assigned an identifier and a unique key part as a data pair. The identifier may be compiled into the binary code for the software object, while each unique key part is maintained in a server database in association with a respective one of the identifiers.

The compiled code for each of the separate functions may then be encrypted using a combination key consisting of data generated by any deterministic combination of the first key part and the second key part. Any definite way of combining separate data to produce a unified data value may be used to determine the combination key. The combination cryptographic key may be a symmetric key useful for both encryption and decryption, or a private key part of a public/private key pair.

The identified separate functions portions of the binary code are thereby encrypted using the combination cryptographic key prior to distribution to provide a protected software object for distribution. After encryption, the protected software object includes an unencrypted portion including at least the executable software protection features, and an encrypted portion including the identified portions of the software object selected for control.

The protected software object may then be distributed and installed on one or more client devices. The software should be installed on each client with its encrypted and unencrypted portions intact. The portions encrypted using the combination cryptographic key should not be decrypted during installation, and should be stored on the client in encrypted form. These code portions are to be decrypted at the client at run time. If the client is unable to decrypt these portions, the controlled software functions will not be operational and the software object will be disabled, at least with respect to the controlled functions.

To decrypt the encrypted software portions and enable full operation of the executable at run time, the client extracts the first cryptographic key part from the unencrypted portion of the software object making up the software control functions. If this portion of the software has been tampered with, the client will be unable to extract the first cryptographic key part and will therefore be unable to decrypt the encrypted software portions to unlock the protected software features at run time. Conversely, if the software control functions have not been tampered with, these functions will continue to operate according to their intended purpose and the first cryptographic key part will be recoverable by the client. The client will therefore be able to decrypt the encrypted software portions to access protected software functions, provided that the client also possesses the second key part with which the combination key can be determined.

As noted above, the second key part is stored on a server database in association with an identifier for the software portion that is encrypted using it. The client may be provided access to the data table and second key portions via a secure connection to the server database. In the alternative, or in addition, the server may encrypt the data file using the first key part and/or other cryptographic key and transmit it to the client at the time the software object is activated at the client. The client recovers the identifier for the feature to be unlocked and queries the data table to recover the second key part. The client then generated the combination cryptographic key using the first key part and the second key part, and decrypts the protected feature using the combination key.

Generally, the client should be enabled to recognize and decrypt the encrypted software features at run time. For example, the software may be supplied with code that extracts the first key part from a stored executable file, recognizes one or more files or portions of files that require decryption and the identifier corresponding to such data, queries the data table using the identifier to determine the second key part, generates the combination key using the first key part and second key part, decrypts the protected feature data using the combination key, and causes the decrypted executable data to be loaded into processor memory in the correct sequence for execution by the client processor.

The first cryptographic key part may be hidden in the unencrypted code portion so that it is practically undiscoverable. During the decryption process, the key may be retained only in temporary processor memory and beyond ready discovery by a casual hacker. Even if a skilled hacker is able to discover the key, it cannot readily be used to enable the protected software functions at runtime. Such enablement requires the operation of the key discovery and decryption functions built into the software protection functions. Selectively disabling the software protection functions without disrupting the run-time key discovery and decryption functions would involve fairly arduous reverse engineering and programming tasks, effectively destroying, or at least greatly diminishing, the economic incentives for disabling selected parts of the software protection functions. Thus, the software may be distributed with a greater assurance that its software protection functions will not be disabled, including feature-specific control. This result may be accomplished without requiring additional hardware for software protection, without disrupting the self-contained nature of the distributed software object, and with minimal computational overhead on the client device.

A more complete understanding of the system and method for securing the integrity of executable code using an auto-derived key part in combination with a feature-specific second key part will be afforded to those skilled in the art, as well as a realization of additional advantages and objects thereof, by a consideration of the following detailed description. Reference will be made to the appended sheets of drawings which will first be described briefly.

### BRIEF DESCRIPTION OF THE DRAWINGS

FIG. 1 is a schematic diagram showing elements of a system for securing the integrity of executable code using an auto-derived first key part in combination with an assigned second key part.
FIG. 2 is block diagram showing elements of a system for executing executable code protected by an auto-derived key in combination with an assigned second key part.
FIG. 3 is a flow chart showing an example of a method for securing the integrity of executable code using an auto-derived key in combination with an assigned second key part.
FIG. 4 is a flow chart showing an example of a method for executing executable code protected by an auto-derived key in combination with an assigned second key part.

Throughout the several figures and in the specification that follows, like element numerals are used to indicate like elements appearing in one or more of the figures.

### DETAILED DESCRIPTION

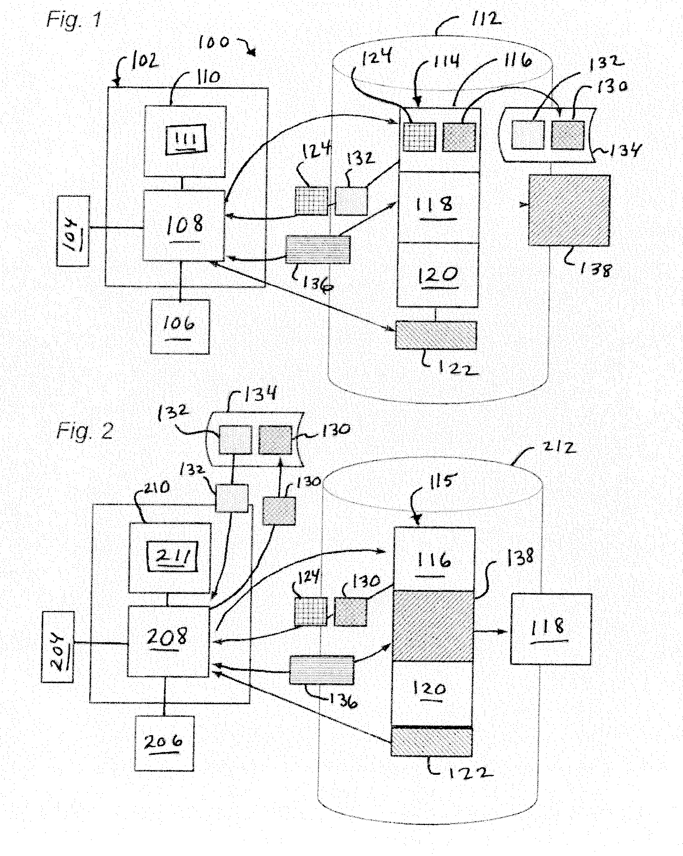

The present technology provides for securing the integrity of executable code using an auto-derived key in combination with an assigned second key part. FIG. 1 shows a server-side system 100 which may be used to configure executable software for distribution. System 100 may comprise a computer 102, also referred to herein as a "server." Computer 102 comprises a processor 108 connected to a memory 110 holding instructions 111 configured to cause actions as described herein. Server 102 may be in use by a person providing control input through an interface device 104 and viewing output from output device 106 to guide and direct processing by processor 208 of operating software 114. Processor 108 may be operably associated with a file storage device 112 on which is stored a software executable object 114, comprising one or more files. The processor 108 and memory 110 with these instructions comprise means for performing the described actions. The instructions 111 may be stored in a computer memory or computer-readable medium and loaded into memory 110 prior to processing the input executable object 114. A computer-readable medium may include but is not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other computer-readable media for storing information.

The software object 114 may comprise a code compiled from source code and configured to perform various functions when executed by a computer. A first portion 116 is compiled from source code for performing software protection functions. Software protection functions are performed by input/output activities that are designed to protect the software 114 from unauthorized use. A simple example of such activities is requiring entry of a serial number or authorization code to enable installation or operation of the software object, using a hardware fingerprint to identify client-side installations, or limiting the number of copies of the software object that can be made. Software protection functions may also include code for managing an controlling access to protected software features using a combination key as described herein. These and other such activities use computing resources to serve the purpose of preventing or discouraging use of the software object that, for example, may be not in compliance with terms of use specified in a license or other agreement, or otherwise undesirable. The first portion 116 comprises compiled code for software protection functions, but not necessarily all software protection functions included in software 114.

Software 114 may further comprise second portion 118 distinct from the protection function portion 116. Second portion 118 may include code for performing any functions. Functions performed by second portion 118 should include a function that it is desired to control independently of other functions of code 114. It should be appreciated that code 114 may include additional portions (not shown) to be configured for independent access control, portion 118 being one of many possible code portions that it is desired to control access to independently of other parts of code 114. For example, if object 114 is a computer game, such independently controlled features may include unlocking of game objects, setting player customization parameters, accessing the game environment, or unlocking levels of play. These examples are not intended to limit the scope of functions that may be included in portion 118 and other independently controlled portions. In some embodiments, these independently controlled portions including portion 118 may be selected to comprise a relatively small but critical part of functions performed by software 114. In other embodiments, independently controlled portions may comprise most or all functions in software 114 except those included in the first portion 116.

Software 114 may further comprise a third portion 120 distinct from the first portion 116 and second portion 118. The third portion 120, if present, may comprise code for performing functions that are not selected for independent control or functions for which a lower level of protection, or a different type of protection, is desired.

Processor 108, under control of instructions stored in memory 110, processes the first code portion 116 to read and extract a definite part 124 of the code portion 116. The part 124 may be selected from the code portion using any defined and reproducible algorithm, for example, extracting every N^{th} bit between specified bit positions to obtain a data signature of definite size. To "extract" here means to read and copy data to generate a definite data object (e.g., part 124) in a computer memory, and does not require removing or altering any data in code portion 116. Software object 114 should be unaltered by the extraction of part 124. Part 124 may comprise the entirety of code portion 116, or some smaller part. It may be extracted from contiguous, or non-contiguous data comprising the compiled code 114. Key part 114 should comprise some minimum non-zero number of bits, for example, 128, 256 or 512 bits. A greater number of bits decreases the risk of brute-force attempts to discover the key value.

Processor 108 may further extract or generate an identifier 130 compiled as part of code portion 116 or other part of code 114 exclusive of the controlled portion 118. The processor may generate the identifier and compile it into code 114. In the alternative, the processor may extract the identifier 130 from compiled code in a manner similar to the first key part 124. The identifier may comprise any discrete data object configured for identification purposes, such as by being unique while using an efficient number of data bits for the applicable set of items to be identified. In the present case, the items to be identified comprise a set of second key parts, for example second key part 132 shown in data table 134.

Processor 132 may generate or otherwise obtain the second key part 132, comprising a defined non-zero number of bits, for example, 128, 256, or 512 bits. The second key part may be stored in a data table or data base accessible to processor 108, in association with the key identifier 130.

Processor 108 and memory 11 may be further programmed to compute a data signature for a combination of the extracted first key part 124 and the second key part 132. The key parts may be combined in any definite fashion, including but not limited to sequencing the first key part and the second key part together to form a unified data sequence. The processor may then further process the combined key data, such as using a one-way hash, data signature, cryptographic hash, or similar procedure, to produce a cryptographic key 136. Suitable cryptographic and other hash functions, for example, SHA-256/224, are known in the art of cryptography.

After computing the data signature, the processor under control of instructions in memory 110, uses the cryptographic key 136 to encrypt the second data portion 118 to provide an encrypted second data portion 138. The processor may use the key 136 as a symmetrical encryption key, useful for both encryption and decryption. In the alternative, the processor may use the key 136 as the private part of a public/private key pair. The processor replaces the unencrypted code portion 118 with the encrypted output 138 in software object 114, to generate a new software object 115 (shown in FIG. 2) comprising the portions 116, 138 and 120, and excluding the unencrypted portion 118.

The processor may repeat the processes of defining an identifier, second key part, combination key data, and cryptographic key for encrypting any additional portions of the software that, like portion 118, are to be configured for independent control. It should be appreciated that any additional identifiers and second key parts that the processor defined for additional code portions will be have values that are distinct from each other and from the values of identifier 130 and second key part 132 discussed above. These additional values may be included in the data table 134, which may be compiled or otherwise included with code package 114 by processor 108. In the alternative, or in addition, the data table 134 may be maintained at a secure server for access by remote clients. The processor 108 may obfuscate and/or encrypt the data table 134 to prevent and discourage decompiling or other unauthorized use.

Software object 114 and/or the new software object 115 may also include a code portion 122 comprising instructions and/or data for use in encrypting and/or decrypting portion 118/119. For example, code portion 122 may comprise: data that defines the various portions 116, 118 (or 119), and 120; data defining the location and extent of the first key data 124 extracted for generating a cryptographic key; data defining the location and extent of identifier 130; instructions for obtaining the second key part 132 from a data base or data table (which may be separately encrypted); an algorithm defining computational steps for combining and determining the cryptographic key 136 from the first key part 124 and the second key part 132; an algorithm defining computational steps for encrypting the code portion 118; an algorithm defining computational steps for decrypting the code portion 119; and/or information for assembling or coordinating execution of decrypted data with portions 116, 120 to provide executable program instructions. In some embodiments, code portion 122 may be packaged with software object 114 and processed by processor 108 to generate the software 115. In the alternative, or in addition, the parameters defined by the code portion 122 may be determined by processor 108 as part of its programmed data processing, and appended to the original code package 114 after processing. Like other portions of software 114 and 115, code portion 122 may be compiled as executable binary data. Like other parts of code package 114 and 115, it may be obfuscated and/or encrypted to prevent and discourage decompiling or other unauthorized use.

After the second portion 118 is encrypted to become encrypted portion 119, the code package 115 may be distributed in any suitable way for installation and use on a client computing device. For example, FIG. 2 shows elements of a client computer 202 comprising a processor 208 connected to a memory 210 holding instructions 211 configured to cause actions as described herein. Processor 208 may be operably associated with a file storage device 212 on which is stored a software executable object 115, comprising one or more files. The processor 208 and memory 210 with these instructions 211 may comprise means for performing the described actions. The instructions 211 may comprise part of the protected code 115, for example code portion 122, and may be stored in a computer memory or computer-readable medium and loaded into memory 210 during or prior to processing the software object 115.

Executable object 115 may comprise the elements discussed above for executable software 114, except that encrypted code portion 138 replaces the unencrypted binary code 118 processed by server 102 and the combination key functions 122 may be added. Client 202 may be in use by a person providing control input through an interface device 204 to achieve a desired output from output device 206, via interaction with processor 208 operating software 115. To successfully operate software 115, the processor must at some time or times decrypt the encrypted portion 119. To avoid creating decrypted stored executable files, the processor 208 may, according to a predetermined scheme, decrypt the encrypted portion only at a specified time or times during operation of executable 115, and maintain the unencrypted data 118 exclusively in a buffer or other temporary memory until the program 115 is terminated, at which time the processor 208 may delete the unencrypted code 118 or allow it to be lost as memory space is overwritten with other data or powered down.

To decrypt the encrypted portion 118, client 202 may access decryption instructions 122. Using the instructions and/or data encoded in code portion 122, the processor may locate and read the first key data 124 located in code portion 116 and the identifier 130. The processer 208 then queries the data table 134, which may be sited locally or remotely, to obtain the second key part needed to generate the decryption key 136. If additional code portions (not shown) require independent decryption, processor 208 may obtain additional identifiers and second key parts in a corresponding manner. The processor may then combine the first key part 124 with the second key part 132 to obtain combination key data according to instructions 122, which the processor may then hash using a designated technique to obtain the required cryptographic key 136 needed to decrypt portion 138. Each different second key part may be combined by the processor with the first key part 124 to generate independent combination data that may be hashed to obtain additional keys for decrypting independently encrypted portions (not shown) of code 115. Different features of code 115 may thereby be independently protected using independent decryption keys, all of which require the first key part 124 to generate at the client. Each decryption key also requires an independently obtained second key part obtained using a predesignated identifier in the manner described above.

Accordingly, if code portion 116 encoding software protection functions has been altered in any meaningful way, the first key part 124 will not be intact and client 202 will be unable to decrypt code portion 119. If code portion 116 is unaltered, the first key part 124 will be intact. In either case, processor 208 may process combination key data derived from the first key part 124 and second key part 132 using the designated cryptographic hash, which is designated by code portion 122 or by some other means, such as with a separately distributed protection scheme. By applying the designated hash to the combination key data, the processor will obtain the necessary cryptographic key for decrypting the encrypted code portion 118. If the first key part 124 is not perfectly intact, the processor will not obtain a useful key. Likewise, if the code portion 116 is intact, it will control the ability of the processor to obtain the identifiers and/or second key parts needed to complete the decryption of designated functions. Therefore these functions will, with the assurance provided by the first key part 124, be unlocked only if the user meets requirements encoded in code portion 116.

The processor 208 may decrypt code portion 119 to obtain unencrypted code 118, which the processor may maintain in a temporary storage buffer and execute as required to perform the actions coded by portion 118. Decryption instruction 122 or other code portion may enable coordination of the buffered decrypted code portion 118 and the remainder of executable 115. If the decrypted data is not functional, this indicates that the decryption key is not valid and that, thus, the software protection functions have been altered. Conversely, if the functions coded by portion 118 execute normally, this means that the software protection portion 116 is not altered, and has or will be executed by processor 208.

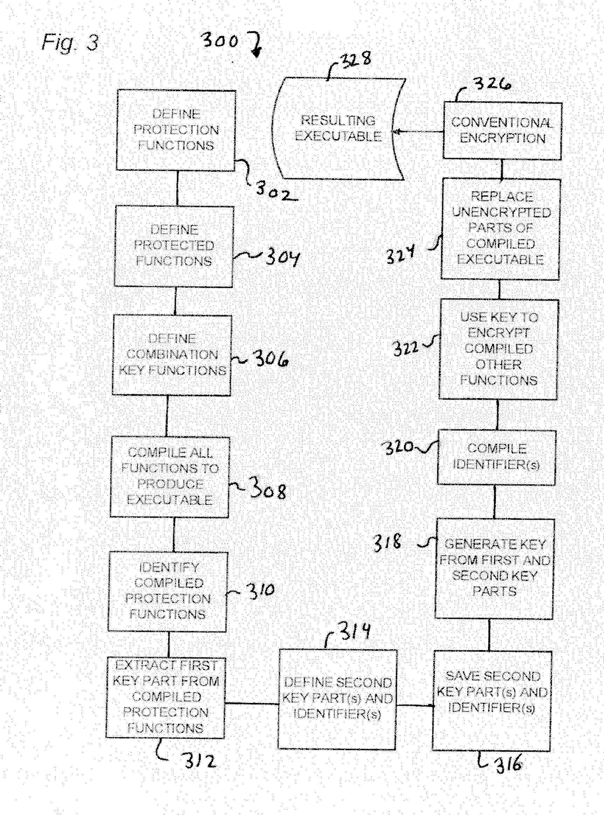

In accordance with the foregoing, FIG. 3 shows an exemplary method 300 and steps for performance by a server to protect a designated software executable using an embedded key part and identified key part scheme. Method 300 may be applied to a wide range of different types of executable data and files to provide a more secure product for public distribution and to enable independent control of access to software functions for the distributed software. Once the server has received a completed executable, the code portion making up the designated software protection functions should be defined 302. These are the functions that are to be protected from alteration, and that are not part of the core product functions as are normally used at the client nodes. If source code is supplied to the server, the software protection portion may be defined by reading and classifying the source code. If only compiled code is provided, it should be provided with data addresses that define and delimit the extent of the software protection functions.

At 304, the server may similarly define protected functions that are not included in the software protection functions, and are to be separately protected using a combination key scheme. One or more of protected functions may be defined. At 306, the server may define the combination key functions, meaning those functions that define the combination key protection scheme, e.g., as defined by code portion 122 discussed above. As noted above, combination key functions may, in the alternative, be added by the server to the resulting protected executable 328 according to a protection scheme defined at the server. Together, steps 302, 304, and 306 describe a process of generating or receiving source code, and classifying the functions defined by the received source code into mutually exclusive categories. A category of unprotected code (not shown) may also exist.

At 308, the server may compile the source code 308 to produce one or more executable files. The server may then be used to identify 310 the limits of the compiled protection functions and other functions in the compiled code, through the use of data mapping and/or markers. At 312, the server extracts key data from the compiled protection function according to its identified limits. At 314, the server defines one or more second key parts and a corresponding identifier for each key part as one or more key/identifier data pairs. The server may generate each data pair for use in encrypting different code segments to enable independent access control for different features or functions of the software.

The server may save 316 each data pair in a database or data table. The server by obfuscate and/or encrypt the data table and package it with the software to be protected. In the alternative, or in addition, the server may store each key pair in a secure database for access by remote clients at run time. At 318, the server may combine the first key part and, for each independently protected code segment, a respective one of the second key parts, such as by conjugating each part together to form a unitary data object. The server may generate a cryptographic signature of the unitary data object using any suitable defined process to obtain a cryptographic key. In addition, the server may save each identifier in a format accessible to each client that will be operating the target software. For example, the server may compile 320 one or more identifiers as part of the distributed code. The identifiers should be saved with information indicating which of the separately protected functions will be encrypted or decrypted using a key obtained in part using the identifier. Such information will be necessary for the client to select the correct identifier needed to decrypt different parts of the distributed code.

Using the cryptographic keys derived from the combination of the first key part and each respective second key part, the server may encrypt 322 each separate portion of the executable data that is designated for encryption with a corresponding one of the keys. The server may discard (not preserve in any memory) the keys used for encryption. However, the server may write the combination key functions, including the limits of the first key part, the identifier needed to obtain the second key part, and the cryptographic signature algorithm used to compute the data signature, or an identifier of the algorithm, to data associated with or incorporated in the executable program.

At 324, the server removes the unencrypted part of the executable program that is designated for protection, and adds the data encrypted at step 322. The server may also include executable modules incorporating the combination key instructions intended for use when operating the protected program. The completed protected program may include the compiled software protection functions, the combination key functions, an encrypted portion, and optionally, functions that are not included in any of the foregoing, such as auxiliary functions that do not require a high degree of protection.

At 326, the server may apply a conventional encryption process to the assembled executable. This step merely adds a conventional layer of additional protection to the resulting executable 328. The resulting executable 328 may be encoded on any suitable computer-readable medium for later distribution to one or more clients.

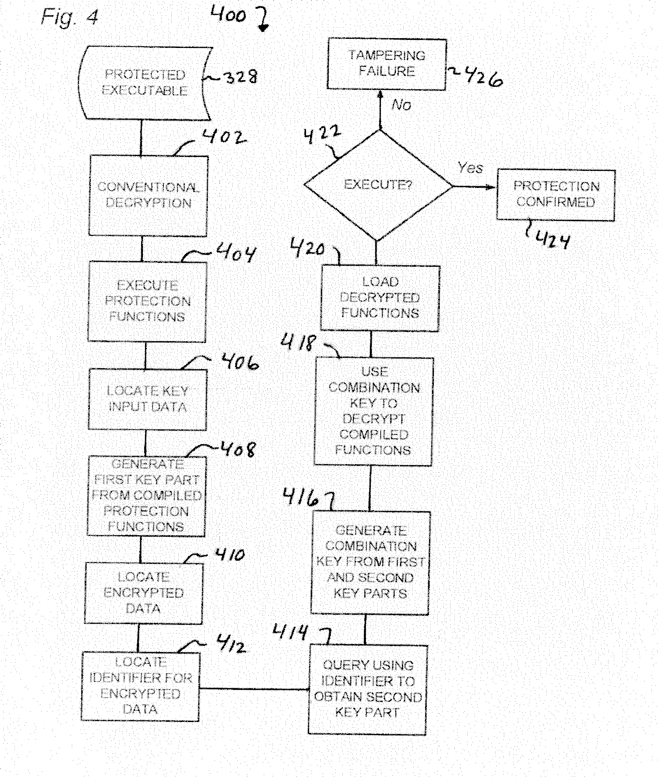

FIG. 4 shows a method 400 that may be performed by a client receiving the protected executable 328. If conventional encryption (e.g., PKI or other scheme) was used to encrypt the executable, the client may decrypt 402 the entire executable prior to further processing. However, decryption step 402 will not result in decryption of the specially encrypted executable portions encrypted at step 322 of FIG. 3.

At 404, the client may execute the protected software protection functions in which at least the first key part, and optionally identifiers for one or more second key parts, is embedded as data. These functions should be performed by the client in response to the conditions specified for them, at initial installation and/or at other times. These may include both existing functions known in the art, and protection functions to be developed in the future. The client may require successful completion of the protection functions before proceeding with method 400. For example, the client may require that the client device is authorized to install and/or operate the protected executable or that the client is in use by a person with authority to use the protected executable, as determined by the protection functions, before proceeding with subsequent steps.

Steps 406-418 together provide examples of actions that may be referred to as combination key functions. It is necessary that the client be provided with instructions for performing the combination key functions. These instructions may be provided with or as part of the protected executable 328 as described above. In the alternative, the combination key functions may be separately transmitted, for example from a server to the client at run time in response to some event triggered by the software protection functions, or by some other method.

At 406, the client locates the key data in the protected executable, using a map or algorithm supplied by the combination key functions. The client read and loads the key data into processor memory as a first step in obtaining a combination key. Next, the client locates 410 encrypted data in the protected executable corresponding to one of the protected features that is to be accessed. The protection functions should operate to ensure that the client is authorized to access the protected feature some time prior to actual decryption or use of the feature. The client may locate 410 the encrypted data using a second map or algorithm supplied by the combination key functions. In the same process, or in a corresponding similar process, the client locates a key identifier compiled into the executable 328 for the feature to be accessed.

Then, at 414, the client may query a remote or local data table using the key identifier to obtain a second key part. The client combines 416 the first key part and the second key part to generate a combination key. The client may perform a cryptographic hash or other one-way function using the combination of the first and second key parts to obtain a decryption key. The client may combine the first key part with different second key parts, and hash the resulting combinations, to obtain different decryption keys for different parts of the protected executable 328. The client may independently decrypt 418 each of the encrypted data portions using a corresponding one of the decryption keys generated at 416.

If each decryption key is valid and the software executable has not been corrupted, the resulting decrypted code will comprise part of the original executable that performs valuable functions on the client. The client may load each decrypted code portion 420 into processor memory and/or a protected memory buffer, for execution whenever called for. If the decrypted functions operate normally when called 422, then operation of the software protection functions is indirectly confirmed 424. Conversely, if the decrypted functions do not operate normally, then this indicates that the software protection functions have been tampered with or corrupted 426. Thus, the technology disclosed herein discourages and prevents tampering with software protection features of distributed executable software, without requiring additional any additional hardware.

Having thus described a preferred embodiment of securing the integrity of executable code using a combination key, it should be apparent to those skilled in the art that certain advantages of the within system have been achieved. The following claims define the scope of what is claimed.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method for protecting software from tampering, comprising:
hashing, using a computer (102), first compiled software (116) stored in a computer memory (110) to generate a first key part (124), the first compiled software configured to prevent unauthorized use of protected features distinct from the first compiled software when executed by a computer processor (108);
associating an identifier and a second key part (132) with each of the protected features;
generating, for each of the protected features, a cryptographic key (136) by combining the first key part with the second key part (132) that is associated with the protected feature;
encrypting each protected feature using the cryptographic key (136) that was generated using the second key part that is associated with the protected feature; and
storing the first compiled software, the encrypted protected features and the identifiers in a computer memory (110) for distribution as software to a client device and
storing the identifiers and their associated second key parts in the computer memory (110) separately from the software.

2. The method of claim 1, further comprising executing an algorithm for generating the cryptographic key, said algorithm distinct from the first compiled software.

3. The method of claim 2, further comprising including the executable algorithm in the computer memory (110) for distribution in software (114).

4. The method of claim 2, further comprising storing the executable algorithm at a network node and not in the computer memory (110).

5. The method of claim 1, further comprising configuring the software with code for associating an identifier and a second key part with the protected software.

6. The method of claim 1, further comprising generating a data table (134) storing each identifier (130) with its associated second key part (132).

7. The method of claim 6, further comprising serving the data table (134) from a server to a client operating the software.

8. The method of claim 1, further comprising configuring the software with code for generating the cryptographic key from the first key part (124) and a second key part (132).

9. The method of claim 8, further comprising including the code for generating the cryptographic key within the software separately from the first compiled software.

10. A method for executing software at a client device, comprising:
hashing a first portion (116) of executable software using a computer processor (208) to extract a first key part (1124) and extracting a feature identifier (130) from a second portion of the executable software stored in a computer memory (212), the feature identifier identifying a locked feature stored in a third portion (120) of the executable software;
querying a data table (134) using the feature identifier (130) to obtain a second key part (132);
combining the first key part (124) and the second key part (132) to generate a decryption key (136);
decrypting the third portion (120) of the executable software using the decryption key (136) to provide an executable third portion that is distinct from the first (116) and second portions (118) of the executable software; and
executing the executable third portion (120) using the computer processor (208) to unlock the feature;
wherein the first key part (124) is extractable by hashing the first portion of the executable software only when the first portion (116) is perfectly intact.

11. The method of claim 10, further comprising executing the second portion of the executable software to perform a function that protects the executable software from unauthorized use or tampering.

12. The method of claim 11, wherein the function that protects the executable software from unauthorized use or tampering determines whether the executable software is installed on an authorized client device before decrypting the third portion of the executable software.

13. The method of claim 11, wherein the function that protects the executable software from unauthorized use determines whether the client device is in use by an authorized user before decrypting the third portion of the executable software.

14. The method of claim 10, wherein the first key part is extracted from non-contiguous data segments of the executable software by the computer processor.

15. The method of claim 14, wherein the first portion of executable software includes an algorithm for locating the non-contiguous data segments.

## Patentansprüche

1. Verfahren zum Schützen von Software vor Fälschung, das aufweist:
- Hashen, mittels eines Computers (102), von erster kompilierte Software (116), die in einem Computer-Hauptspeicher (Memory) (110) gespeichert ist, um eine erste Schlüsselkomponente (124) zu generieren, wobei die erste kompilierte Software dazu ausgestaltet ist, eine nicht autorisierte Verwendung von geschützten Merkmalen, die sich von der ersten kompilierten Software unterscheiden, bei der Ausfuhrung durch einen Computerprozessor (108) zu verhindern;
- Zuordnen einer Kennzeichnung und einer zweiten Schlüsselkomponente (132) zu einem jeden der geschützten Merkmale;
- Generieren, für jedes von den geschützten Merkmalen, eines kryptografischen Schlüssels (136) durch Kombinieren der ersten Schlüsselkomponente mit der zweiten Schlüsselkomponente (132), die dem geschützten Merkmal zugeordnet ist;
- Verschlüsseln eines jeden geschützten Merkmals mittels des kryptografischen Schlüssels (136), der mittels der zweiten Schlüsselkomponente generiert worden ist, die dem geschützten Merkmal zugeordnet ist; und
- Speichern der ersten kompilierten Software, der verschlüsselten geschützten Merkmale und der Kennzeichnungen in einem Computer-Hauptspeicher (110) zum Verteilen als Software an ein Client-Gerät; und
- Speichern der Kennzeichnungen und der zugeordneten zweiten Schlüsselkomponenten davon getrennt von der Software im Computer-Hauptspeicher (110).

2. Verfahren nach Anspruch 1,
das ferner das Ausführen eines Algorithmus zum Generieren des kryptografischen Schlüssels umfasst, wobei der Algorithmus sich von der ersten kompilierten Software unterscheidet.

3. Verfahren nach Anspruch 2,
das ferner das Aufnehmen des ausführbaren Algorithmus in den Computer-Hauptspeicher (110) zur Verteilung in Software (114) umfasst.

4. Verfahren nach Anspruch 2,
das ferner das Speichern des ausführbaren Algorithmus an einem Netzwerkknoten und nicht im Computer-Hauptspeicher (110) umfasst.

5. Verfahren nach Anspruch 1,
das ferner das Konfigurieren der Software mit einem Code zum Zuordnen einer Kennzeichnung und einer zweiten Schlüsselkomponente mit der geschützten Software umfasst.

6. Verfahren nach Anspruch 1,
das ferner das Generieren einer Datentabelle (134) umfasst, die jede Kennzeichnung (31) mit der zugeordneten zweiten Schlüsselkomponente (132) speichert.

7. Verfahren nach Anspruch 6,
das ferner das Bereitstellen der Datentabelle (134) von einem Server an einen Client umfasst, der die Software betreibt.

8. Verfahren nach Anspruch 1,
das ferner das Konfigurieren der Software mit einem Code zum Generieren des kryptografischen Schlüssels aus der ersten Schlüsselkomponente (124) und einer zweiten Schlüsselkomponente (132) umfasst.

9. Verfahren nach Anspruch 8,
das ferner die Aufnahme von einem Code zum Generieren des kryptografischen Schlüssels in der Software getrennt von der ersten kompilierten Software umfasst.

10. Verfahren zum Ausführen von Software auf einem Client-Gerät,
das Folgendes umfasst:
- Hashen eines ersten Bereichs (116) der ausführbaren Software mittels eines Computerprozessors (208), um eine erste Schlüsselkomponente (1124) zu extrahieren, und Extrahieren einer Merkmalskennzeichnung (130) aus einem zweiten Bereich der ausführbaren Software, die in einem Computer-Hauptspeicher (212) gespeichert ist, wobei die Merkmalskennzeichnung ein gesperrtes Merkmal angibt, das in einem dritten Bereich (120) der ausführbaren Software gespeichert ist:
- Abfragen einer Datentabelle (134) mittels der Merkmalskennzeichnung (130), um eine zweite Schlüsselkomponente (132) zu erhalten;
- Kombinieren der ersten Schlüsselkomponente (124) und der zweiten Schlüsselkomponente (132), um einen Entschlüsselungsschlüssel (136) zu generieren;
- Entschlüsseln des dritten Bereichs (120) der ausführbaren Software mittels des Entschlüsselungsschlüssels (136), um einen ausführbaren dritten Bereich zu liefern, der sich von dem ersten Bereich (116) und dem zweiten Bereich (118) der ausführbaren Software unterscheidet; und
- Ausführen des ausführbaren dritten Bereichs (120) mittels des Computerprozessors (208), um das Merkmal zu entsperren;
wobei die erste Schlüsselkomponente (124) durch das Hashen des ersten Bereichs der ausführbaren Software nur dann extrahierbar ist, wenn der erste Bereich (116) vollkommen intakt ist.

11. Verfahren nach Anspruch 10,
das ferner das Ausführen des zweiten Bereichs der ausführbaren Software umfasst, um eine Funktion durchzuführen, die die ausführbare Software vor einer unberechtigten Benutzung oder einer Fälschung schützt.

12. Verfahren nach Anspruch 11,
wobei die Funktion, die die ausführbare Software vor unberechtigter Benutzung oder Fälschung schützt, bestimmt, ob die ausführbare Software auf einem berechtigten Client-Gerät installiert ist, bevor der dritte Bereich der ausführbaren Software entschlüsselt wird.

13. Verfahren nach Anspruch 11,
wobei die Funktion, die die ausführbare Software vor unberechtigter Benutzung oder Fälschung schützt, bestimmt, ob das Client-Gerät von einem berechtigten Benutzer verwendet wird, bevor der dritte Bereich der ausführbaren Software entschlüsselt wird,

14. Verfahren nach Anspruch 10,
wobei die erste Schlüsselkomponente durch den Computerprozessor aus nicht aufeinanderfolgenden Datensegmenten der ausführbaren Software extrahiert wird.

15. Verfahren nach Anspruch 14,
wobei der erste Bereich der ausführbaren Software einen Algorithmus zur Lokalisierung der nicht aufeinanderfolgenden Datensegmente aufweist.

## Revendications

1. Procédé de protection de logiciel contre la manipulation, comprenant :
le hachage, via une mise en oeuvre par ordinateur (102), d'un logiciel à compilation initiale (116) stocké dans une mémoire d'ordinateur (110) afin de générer une première partie de clé (124), le logiciel à compilation initiale étant configuré pour empêcher toute utilisation non-autorisée de caractéristiques protégées distinctes du logiciel à compilation initiale lorsqu'elles sont exécutées par un processeur d'ordinateur (108) ;
l'association d'un identifiant et d'une deuxième partie de clé (132) avec chacune des caractéristiques protégées ;
la génération, pour chacune des caractéristiques protégées, d'une clé de chiffrement (136) en combinant la première partie de clé (124) avec la deuxième partie de clé (132) associée à la caractéristique protégée ;
le chiffrement de chaque caractéristique protégée via la mise en oeuvre de la clé de chiffrement (136) qui a été générée en utilisant la deuxième partie de clé associée à la caractéristique protégée ; et
le stockage du logiciel à compilation initiale, des caractéristiques protégées, et des identifiants dans une mémoire d'ordinateur (110) pour la distribution sous forme de logiciel à un dispositif client et le stockage des identifiants et de leurs deuxièmes parties de clé dans la mémoire d'ordinateur (100) de manière séparée du logiciel.

2. Procédé selon la revendication 1, comprenant en outre l'exécution d'un algorithme pour la génération de la clé de chiffrement, ledit algorithme étant distinct du logiciel à compilation initiale.

3. Procédé selon la revendication 2, comprenant en outre l'incorporation de l'algorithme exécutable dans la mémoire d'ordinateur (110) pour la distribution sous forme de logiciel (114).

4. Procédé selon la revendication 2, comprenant en outre le stockage de l'algorithme exécutable au niveau d'un noeud de réseau et non pas dans la mémoire d'ordinateur (110).

5. Procédé selon la revendication 1, comprenant en outre la configuration du logiciel avec du code pour associer un identifiant et une deuxième partie de clé avec le logiciel protégé.

6. Procédé selon la revendication 1, comprenant en outre la génération d'une table de données (134) qui stocke chaque identifiant (130) avec sa deuxième partie de clé associée.

7. Procédé selon la revendication 6, comprenant en outre le service de la table de données (134) depuis un serveur vers un client faisant fonctionner le logiciel.

8. Procédé selon la revendication 1, comprenant en outre la configuration du logiciel avec du code pour générer la clé de chiffrement à partir de la première partie de clé (124) et de la deuxième partie de clé (132).

9. Procédé selon la revendication 8, comprenant en outre l'incorporation du code de génération de la clé de chiffrement dans le logiciel de manière séparée du logiciel à compilation initiale.

10. Procédé d'exécution de logiciel au niveau d'un dispositif client, comprenant :
le hachage d'une première partie (116) d'un logiciel exécutable via l'utilisation d'un processeur d'ordinateur (208) afin d'extraire une première partie de clé (1124) et l'extraction d'un identifiant de caractéristique (130) d'une deuxième partie du logiciel exécutable stockée dans une mémoire d'ordinateur (212), l'identifiant de caractéristique identifiant une caractéristique verrouillée stockée dans une troisième partie (120) du logiciel exécutable ;
la sollicitation d'une table de données (134) utilisant l'identifiant de caractéristique (130) pour obtenir une deuxième partie de clé (132) ;
la combinaison de la première partie de clé (124) et de la deuxième partie de clé (132) pour générer une clé de déchiffrement (136) ;
le déchiffrement de la troisième partie (120) du logiciel exécutable mettant en oeuvre la clé de déchiffrement (136) afin de fournir une troisième partie exécutable distincte des première (116) et deuxième (118) parties du logiciel exécutable ; et
l'exécution de la troisième partie (120) via l'utilisation du processeur d'ordinateur (208) afin de déverrouiller la caractéristique ;
selon lequel la première partie de clé (124) est extractible par le hachage de la première partie du logiciel exécutable uniquement lorsque la première partie (116) est parfaitement intacte.

11. Procédé selon la revendication 10, comprenant en outre l'exécution de la deuxième partie du logiciel exécutable afin d'effectuer une fonction qui protège le logiciel exécutable d'une utilisation ou d'une manipulation non-autorisée.

12. Procédé selon la revendication 11, selon lequel la fonction qui protège le logiciel exécutable d'une utilisation ou d'une manipulation non-autorisée évalue si le logiciel exécutable est installé sur un dispositif client autorisé avant le déchiffrement de la troisième partie du logiciel exécutable.

13. Procédé selon la revendication 11, selon lequel la fonction qui protège le logiciel exécutable d'une utilisation non-autorisée évalue si le dispositif client est en utilisation par un utilisateur autorisé avant le déchiffrement de la troisième partie du logiciel exécutable.

14. Procédé selon la revendication 10, selon lequel la première partie de clé est extraite à partir de segments de données non-contigus du logiciel exécutable par le processeur d'ordinateur.

15. Procédé selon la revendication 14, selon lequel la première partie du logiciel exécutable comporte un algorithme pour la localisation des segments de données non-contigus.
